(19) Europäisches Patentamt
European Patent Office
Office européen des brevets

(11) Publication number: **0 071 431**
**B1**

(12) **EUROPEAN PATENT SPECIFICATION**

(45) Date of publication of patent specification: **11.06.86**

(51) Int. Cl.$^4$: **D 21 H 3/38,** D 21 C 5/02

(21) Application number: **82303899.7**

(22) Date of filing: **23.07.82**

# (54) Bonded fibrous wet strength webs.

(30) Priority: **24.07.81 US 286077**
**24.07.81 US 286078**

(43) Date of publication of application:
**09.02.83 Bulletin 83/06**

(45) Publication of the grant of the patent:
**11.06.86 Bulletin 86/24**

(84) Designated Contracting States:
**BE FR GB IT**

(73) Proprietor: **SCOTT PAPER COMPANY**
**Industrial Highway Tinicum Island Road**
**Tinicum Township**
**Delaware County, PA 19113 (US)**

(72) Inventor: **Drach, John E.**
**641 Croyden Road**
**Cheltenham Pennsylvania (US)**

(74) Representative: **McCall, John Douglas et al**
**W.P. THOMPSON & CO. Coopers Building**
**Church Street**
**Liverpool L1 3AB (GB)**

(56) References cited:
**FR-A-1 209 381**
**GB-A-1 121 464**
**JP-A-70 041 609**
**JP-A-74 090 390**
**US-A-2 999 038**
**US-A-3 017 291**
**US-A-3 555 585**
**US-A-3 658 640**
**US-A-3 795 648**
**US-A-3 816 238**
**US-A-3 853 609**
**US-A-3 968 310**
**US-A-4 242 408**

(56) References cited:

**TAPPI, J. Techn. Ass. Pulp Paper Ind., vol. 63, no. 8, August 1980, pages 86-88, Atlanta, GA, USA A.N. NEOGI et al.: "Wet strength improvement via fiber surface modification"**

**CHEMICAL ABSTRACTS, vol. 84, no. 8, 23rd February 1976, page 132, no. 46408b, Columbus, Ohio, USA**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates, generally to cellulosic fibrous webs treated with wet strength resins.

In a conventional paper-making operation cellulosic fibres are dispersed in water, drained on a wire screen, pressed into close physical contact and dried. The result is a paper sheet in which the individual fibres are held together by hydrogen bonds which give strength to the dry sheet. When the dry sheet is wet, these hydrogen bonds are broken and the paper loses most of its strength.

To prevent this loss of strength, various chemical treatments have been employed. Among the most successful treatments is the use of synthetic resins which, when added to the cellulosic fibres, either before or after a sheet is formed therefrom, and cured or polymerized, can significantly increase the wet strength of the sheet.

Most commonly used are the urea-formaldehyde resins, the product of the condensation of urea and formaldehyde, and malamine-formaldehyde resins, the condensation product of malamine and formaldehyde. An outstanding disadvantage associated with the use of these resins is that if they are not totally cured, a sheet treated with them can emit formaldehyde or toxic aldehydic residues can remain in the sheet. Other resins useful in increasing the wet strength of cellulosic webs include polyamine-epihalohydrin resins, the condensation product of polyamines with epihalohydrins, glyoxalated polyacrylamide resins which are the products of the addition polymerization of N-glyoxalated acrylamide and at least one other ethylenically unsaturated monomer and/or an ethylenically unsaturated urated basic nitrogen-containing monomer.

Recently, it has become desirable to eliminate the use of formaldehyde-based wet strength resins because of the known and suspected toxic effects of formaldehyde. Formaldehyde-based resins, such as urea-formaldehyde and melamine-formaldehyde resins, cure or crosslink by the formation of intermolecular methyleneamide crosslinkages. Formaldehyde is another product of this crosslinking reaction and can at any time be released during the production or use of products treated with formaldehyde-based resins since the curing or crosslinking reaction continues for an extended period even at room temperature. In order to circumvent the possibility of exposure to formaldehyde, this invention describes fibrous webs modified with wet strength resins which are copolymers of amic acids. These resins function as wet strengthening agents by reaction with the cellulose molecules of a cellulosic web. The reaction takes place between the pendent amide functionalities of the amic acid portion of the copolymers and the hydroxyl groups of the cellulosic molecules.

The general reaction between beta-amic acids and alcohols to form half-acid esters was described by Cuculo in a series of publications in the Textile Research Journal, Volume 41 pages 321—326; Volume 41 pages 375—378; volume 43 pages 283—293; volume 45 pages 314—316; volume 46 pages 393—397. These publications describe the preparation of half-acid esters of cellulose by the facile reaction of beta-amic acids and cellulosic hydroxyl groups.

U.S. Patent No. 3,555,585 describes the preparation of cellulose half-acid esters by reaction of beta-carbamyl or gamma-carbamyl acids with cellulose. The disclosure is concerned with modification of non-woven, cellulosic webs to yield disposable fabrics by the formation of cellulosic half-acid esters through the reaction of the cellulosic fabric with a carbamyl substituted organic acid.

The use of salts of copolymers of maleic acid and an ethylenically unsaturated monomer for improving the wet strength of paper has been known since at least 1952. U.S. Patent No. 2,621,169 granted December 9, 1952 to Robinette et al discloses that ammonium salts of copolymers of styrene and maleic anhydride have utility in improving the wet strength of paper (without specifically teaching how such improvement is obtained). Robinette et al emphasize however that care must be taken in preparing the polymeric compositions of their invention to avoid the formation of amides. Thus the prior art as represented by U.S. Patent No. 2,621,169 teaches away from the present invention wherein it has been found that resins containing maleamic acid impart wet strength to paper.

U.S. Patent No. 3,107,291 granted January 16, 1962 to McLaughlin et al describes the fuse of emulsion copolymers containing an acid such as maleic or aconitic, and their salts, as wet strength resins. This patent at Column 1, lines 36—39 contains the naked suggestion that salts of partial amides, such as the salt of maleamic acid, can be produced by neutralization of the emulsion copolymers of the patented invention with ammonia and amines. While there is no subsequent enabling disclosure or teaching in respect of such salts merely named by McLaughlin et al, neutralization as normally understood by one of ordinary skill in the art and in accordance with the disclosure of an antecedent patent assigned to the same assignee, namely U.S. Patent No. 2,999,038, at Column 2, lines 50—24, means that aqueous alkali, particularly ammonia, is added to the copolymer. The resulting compound, in the case hypothersized by McLaughlin et al would contain the diammonium salt of maleic acid, not the salt of a half-acid, half-amide characteristic of a salt of maleamic acid.

It is known in the art of making self-crosslinking latices to eliminate the known and potential hazards of formaldehyde-containing latices to make latices whose copolymers contain functional groups capable of reacting with innocuous polyaldehydes such as glyoxal. These systems take advantage of the reaction between amide groups on separate polymer chains and a polyfunctional aldehyde to crosslink the chains. Talet, U.S. Patent No. 2,886,557, describes the preparation of a crosslinked acrylamide polymer by reaction of a vinyl acetate-acrylamide-containing latex copolymer with glyoxal. Falgiatore et al, in U.S. Patent No.

4,199,643, describe the preparation of a latex binder which contains a copolymer comprised of ethylenically unsaturated vinyl amide — the amide group of which is mono-functionally bonded to a polyaldehyde.

These mono-functionalized aldehyde groups can subsequently react with non-functionalized amide groups to produce a crosslinked polymer after application to the binder to textiles and/or paper. Mackower et al, in Canadian Patent No. 997,091, describe the preparation and use of cellulose-substantive, glyoxalated latex binders containing polymerizable vinyl amide monomers in their latex copolymers. The reported latices contain copolymers comprised of a vinyl amide and at least one other ethylenically unsaturated monomer. The latex copolymer is at least partially reacted with glyoxal prior to application to the wet end of a paper machine.

A way of avoiding the use of formaldehyde in latex binders which are for application to cellulosic materials is to incorporate into the latex copolymer groups which will react with cellulose thereby affixing the latex copolymer to the cellulosic material.

Kimura, in Japanese Patent Disclosure No. 74 90,390 published August 29, 1974, describes a process for the preparation of acrylic copolymers for use as textile finishing agents. The acrylic copolymers described in that invention are prepared in an aqueous latex and contain acrylic monomers and/or other ethylenically unsaturated monomers and unsaturated amic acids such as maleamic acid. When the latices as described in the invention are used as textile finishing agents, they exhibit outstanding resistance to dry cleaning. The superior dry cleanability of these latices is attributed to the existence of the strong fibre-copolymer bonds formed by the reaction of the amic acid pendent functionalities of the latex copolymer and the cellulose molecules of the cotton fabric. The strong fibre-copolymer bonds are the result of an intramolecular esterification between the latex copolymer and the cellulose of the cotton fabric. These ester linkages are insensitive to the action of dry cleaning solvents such as perchloroethylene. The present inventor has found that the latices described by Kimura for improving dry cleanability of textile fabrics are useful for imparting wet strength to cellulosic webs. Not only does Kimura fail to disclose or suggest such a utility but, moreover, the papermaking art has been in the possession of closely related copolymers without recognizing the value of the ester linkages in providing wet strength to paper webs.

JP—A—7 041 609 (Showa Kobashi K.K.) discloses an amionic copolymer resin of acrylamide and maleamic acid which, when precipitated onto pulp by the use of alum in an acid medium imparts dry strength to paper.

According to the present invention there is provided a non-woven fibrous web in which the cellulose fibers are chemically modified by a cross-linking reaction with a binder comprising either

a water-soluble copolymer of (A) a half-acid, half-amide corresponding to the following general formula:

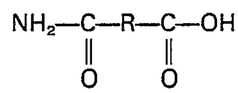

wherein R is a hydrocarbon chain containing a multiple bond capable of radical polymerization, and B) at least one other ethylenically unsaturated monomer, or

a copolymer latex of a monomer which is a polymerizable half-acid, half-amide corresponding to the following general formula:

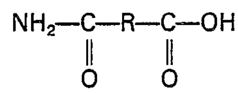

wherein R is a hydrocarbon chain containing a multiple bond capable of radical polymerization, and at least one other ethylenically unsaturated monomer.

The water-soluble amic acid copolymers can be prepared for example by reacting an anhydride-containing precursor copolymer with ammonia, namely by adding it to aqueous ammonia, thereby producing an amic acid-containing copolymer. The resulting amic acid copolymer solution can then be applied to a cellulosic web, such as for example paper, by a variety of methods such as, for example, coating, spraying, or printing. The amic acid copolymers useful in this invention can also be prepared for example, by copolymerizing an ethylenically unsaturated amic acid and at least one other ethylenically unsaturated monomer. The cellulosic webs such as paper, treated with resins, as described in this invention, have off-machine wet tensiles, improved dry tensiles, and improved broke recovery after the finishing operation.

If it is desired that the copolymer be substantive to cellulose, copolymers for use in the present invention can be made by reacting an ethylenically unsaturated amic acid and at least one other ethylenically unsaturated basic nitrogen-containing monomer. The basic nitrogen-containing monomer will impart a cationic character to the copolymer which makes it attractive to anionic cellulose fibres for deposition in the wet end of a paper machine. Suitable examples of the other ethylenically unsaturated, basic nitrogen-containing monomer are N,N-dimethylaminoethylmethacrylate, N,N-diethylaminoethyl-

methacrylate, N,N-dimethylaminoethylacrylate, N,N-diethylaminoethylacrylate 2-vinylpyridine, 4-vinylpyridine, and N-(t-butyl)-aminoethylmethacrylate.

The ethylenically unsaturated amic acids useful in synthesizing these cellulose-substantive polymers are polymerizable compound of the following general formula:

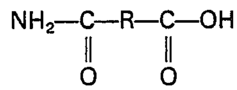

wherein R is a hydrocarbon chain containing a multiple bond capable of radical polymerization. The amount of the amic acid which can be used along with the other monomeric species to make up the desired amic acid copolymer must be chosen so as to render the resulting copolymer water-soluble. Depending upon the nature of the other comonomers, this amount can range from 5% to 50% by weight of the copolymer.

The other ethylenically unsaturated monomers useful in synthesizing the desired amic acid precursor polymer may be for example, acrylic and/or methacrylic acids and/or their esters, amides, substituted amides, and nitriles. Also useful are for example esters of vinyl alcohol, vinyl ethers and ketones, acrolein, styrene and substituted styrenes, vinyl pyridines, ethylene, butadiene, maleic, fumaric and itaconic acids and esters and substituted amides, polymerizable derivatives of allyl alcohol and vinylacetic acid.

The wet, strength resins are applied to the cellulosic webs, such as paper, by any conventional technique for applying a polymer to a cellulosic web. In the case where the web is already formed, the polymer or resin may be applied for example by coating, printing, or spraying. In the case of addition to cellulosic fibres prior to web formation, the resin, if it bears a net positive charge, can for example be added to a slurry of fibres, as in the web end of a paper machine. The net positive charge on the resin renders it substantive to cellulose. The amount of resin added to the web can vary, depending upon the degree of wet strength desired. The preferred amount of resin to be applied is in the range of 0.1 to 5% based upon weight of fibre. The curing or crosslinking reaction can be accelerated for example by the addition of mineral acids or salts of acids such as for example ammonium, magnesium, zinc and tin chlorides, nitrates or sulfates.

The increase in wet tensile strength of celllulosic webs as described in this invention is due to the crosslinking of the amic acid copolymer molecules with the cellulosic substrate.

The polymerization of the monomers to yield water-soluble copolymers can be accomplished for example by well known polymerization techniques as described in such chemistry texts as POLYMER SYNTHESIS, Volume I, II, and III, by Stanley R. Sandler and Wolf Karo, Academic Press, New York and London, (1974), and PREPARATIVE METHODS OF POLYMER CHEMISTRY, second edition, by Wayne R. Sorenson and Tod W. Campbell, Interscience Publishers (John Wiley & Sons, New York (1968).

The preferred ethylenically unsaturated amic acids are

(I) maleamic acid, (Z)-4-amino-4-oxo-2-butenoic acid

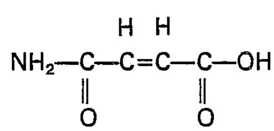

(II) fumaric acid, (E)-4-amino-4-oxo-2-butenoic acid

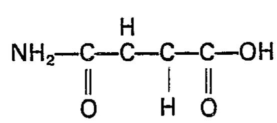

or (III) itaconamic acid, 4-amino-4-oxo-2-methylene butanoic acid

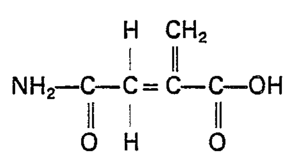

Among the other ethylenically unsaturated monomers useful in the webs of this invention are the vinyl esters of aliphatic acids which have one to ten carbon atoms. The preferred vinyl ester is vinyl acetate especially when used with esters of acrylic or methacrylic acids. The acrylate and methacrylate esters of alkyl and cycloalkyl alcohols having one to twenty carbon atoms are most efficacious in forming useful copolymers with vinyl acetate. The preferred esters of methacrylic acid are the methyl, ethyl, n-propyl, n-butyl, iso-butyl and 2-ethylhexyl esters. The preferred esters of acrylic acid are the methyl, ethyl, n-propyl, n-butyl, iso-butyl, 2-ethyl hexyl with n-butyl being the most preferred.

Most preferably the copolymer is composed of 80—98% by weight acrylamide, 1—10% by weight N,N-dimethylaminoethyl methacrylate, and 1—10% maleamic acid which can be prepared by the addition polymerization of the respective monomers by a standard method as outlined in the chemistry texts mentioned above.

Another preferred method of making a copolymer useful in the webs of this invention is to transform an existing copolymer into an amic acid copolymer. This can be done for example by adding an anhydride-containing copolymer to aqueous ammonia to form an amic acid copolymer.

Thus the copolymers useful in the webs of this invention are also formed as the products of the reaction of an anhydride-containing copolymer and aqueous ammonia. These anhydride-containing copolymers have a general formula

-comonomer-anhydride-comonomer-anhydride-comonomer-anhydride-

The anhydride-containing copolymer as described by the above general formula is the product of the addition polymerization reaction of an ethylenically unsaturated, polymerizable anhydride and at least one other ethylenically unsaturated monomer.

The ethylenically unsaturated, polymerizable anhydride used to synthesize the anhydride-containing copolymer is a cyclic anhydride containing a polymerizable multiple bond capable of radical polymerization. Most preferably the cyclic anhydride is maleic anhydride or itaconic anhydride.

Examples of the other ethylenically unsaturated monomers used to make the anhydride-containing copolymer are the vinyl esters of aliphatic acids which have one to ten carbon atoms; alkyl vinyl ethers which have alkyl groups composed of from one to ten carbon atoms and whose alkenyl groups are composed of from one to ten carbon atoms; alkenes; and alkadienes which have from one to ten carbon atoms.

The preferred vinyl esters of aliphatic acids are vinyl acetate and vinyl propionate. The preferred alkyl vinyl ethers are methyl vinyl ether, ethyl vinyl ether, butyl vinyl ether and propyl vinyl ether. The preferred alkene and/or alkadiene are ethylene, propylene, 1-butene, 2-butene and 1,3-butadiene.

In order to describe the present invention so that it may be more clearly understood, the following Examples are set forth. These Examples are set forth primarily for the purpose of illustration, and any specific enumeration of detail contained therein should not be interpreted as a limitation on the concept of this invention.

Example 1

Into a 500 ml reaction flask equipped with a mechanical stirrer, thermometer, and addition funnel were placed 82.0 grams of water and 8.4 grams of 29% aqueous ammonia (0.143 moles). To the ammonia solution is added 10g of a maleic anhydride methyl vinyl ether copolymer (1:1 mole ratio) (commercial product trademark Gantrez-AN 119, GAF Corp.) in small increments while maintaining a reaction temperature of 65°C ("Gantrez" is a Trade Mark). After all the copolymer has been added, the solution was removed from the reactor and diluted with 1133.6 grams of water.

Example 2

Into a 500 ml reaction flask equipped with a mechanical stirrer, thermometer and addition funnel were placed, 304 grams of water and 46 grams of 29% aqueous ammonia (0.785 moles). To this solution is added 50 grams of a maleic anhydride-ethylene copolymer (1:1 mole ratio) (commercial product trademark EMA 1103, Monsanto, Inc.) in small increments while maintaining the reaction temperature of 65°C ("EMA" is a Trade Mark). After all the copolymer has been added, the solution is cooled to room temperature.

Example 3

The following Tables illustrate the properties achieved by utilizing the resins prepared in the above Examples. Approximately 100 grams of the solution from Example 1 is placed in a container so as to form a saturation bath. All the data presented was obtained from filter paper sheets (Whatman Chromatography Paper #4) measuring approximately 22.9 cm (9") MD (machine direction) × 19.1 cm (7.5") CD (cross direction) which are immersed in a saturation bath. After saturation, the sheets are squeezed through a laboratory wringer, dried overnight at room temperature and cured for 3 minutes at 300°F (149°C). Some of these sheets are then tested for increases in wet and dry tensiles relative to untreated controls. The results are depicted in Table I. The remainder of the treated sheets are allowed to stand at room temperature for an extended period and tested for wet tensile development through natural ageing. The results are shown in Table II.

In Table I the amount of resin applied to the sheet is expressed under the column "%Addition" as a percent by weight of the sheet. Tensile measurements were obtained in a Thwing Albert Tensile Tester in accordance with TAPPI Standard Number T 456m-49. Tensile was measured cross direction for a dry strip (CDT) and a wet strip (CDWT). All tensile values are reported as pounds/inch. These values may be converted to the standard metric unit of grams per 15 millimetres by multiplying by 268.4.

TABLE I

| Treatment | % Addition | Cured Tensiles CDWT | Cured Tensiles CDT |
|---|---|---|---|
| | | g/15mm (lb/in) | g/15mm (lb/in) |
| Example 1 | 1.8 | 1430.6 (5.33) | 2979.2 (11.1) |
| Example 2 | 1.7 | 1736.5 (6.47) | 3650.2 (13.16) |
| Control | 0.1 | 0.0 (0.0) | 1798.3 (6.7) |

TABLE II

Wet Tensile Increase as a Function of Time — Example I Treatment — 1.8% Addition

| Time After Treatment | CDWT | CDI |
|---|---|---|
| | g/15mm (lb/in) | g/15mm (lb/in) |
| 12 hours | 53.7 (0.2) | 2415.6 (9.0) |
| 1 week | 536.8 (2.0) | 2442.4 (9.1) |
| 2 weeks | 590.5 (2.2) | 2415.6 (9.0) |
| 3 weeks | 671.0 (2.5) | 2388.8 (8.9) |

This invention also relates to cellulosic, fibrous webs bonded with a latex binder which, after application and cure, imparts wet and dry strength to the web. Thereafter the fibres in the web can be recovered for re-use in a subsequent web-making process if desired, because the bonded fibres can be readily unbonded or separated by a repulping process. The fibre recovery (repulping of broke) can be achieved under conditions similar to those normally employed by the paper industry for repulping conventional wet-strengthened webs (e.g. strengthened with wet strength resins) without significant degradation of any of the useful properties of the fibre. The binder which may be used in the present invention is an aqueous latex containing an addition polymer comprising ethylenically unsaturated amic acid and at least one other ethylenically unsaturated monomer.

Conventional latices, such as those employed in a papermaking process disclosed in U.S. Patent No. 4,158,594 cannot be repulped to recover the fibres in the paper under conventional repulping conditions because the severe repulping conditions needed to chemically attack the latex would destroy the cellulosic fibres. Conventional latex binders for fibrous webs were therefore classified as "non-repulpable" because webs treated with them could be repulped only with extreme difficulty by reason of their strong resistance to hydrolytic depolymerization or solubilization. This is understandable since such latices have evolved from polymers designed for use in water-based latex paints, such as house paints, where hydrolysis or depolymerization of the paint after drying is meticulously avoided. This resistance to hydrolysis after drying and curing of the latex is achieved by crosslinking of the latex polymers upon curing.

Self-crosslinking latices usually offered in commerce are essentially copolymers and terpolymers of acrylic and methacrylic esters, vinyl esters, olefins, acrylic and methacrylic acids, maleic and fumaric acids, vinylbenzenes, vinylnitriles and N-methylolvinylamides in various combinations and proportions with the N-methylolvinylamide being the source of their self-crosslinking or curing characteristic. An example of such a binder is a latex derived from vinylacetate, ethylene and N-methylolacrylamide. The N-methylolacrylamide (or N-methylolmethacrylamide) contributes a pendant self-crosslinking functionality which does not react until activated by elevated temperature and low pH.

The stability and durability of the crosslinks which form when the latices are cured depends upon the chemical nature of the crosslinks. Methylene crosslinks, as obtained with N-methylol acrylamide monomers incorporated into the latex polymer in conventional latices such as formed when N-methylolvinyl amides (self-crosslinking) or vinyl amides and trimethylolmelamine or vinyl amides and formaldehyde (crosslinkable), are especially inert to alkaline hydrolysis and require a repulping or broking operation which is impracticable or costly.

The nature of such methylene crosslinks is depicted in Fig. 1.

FIG. 1

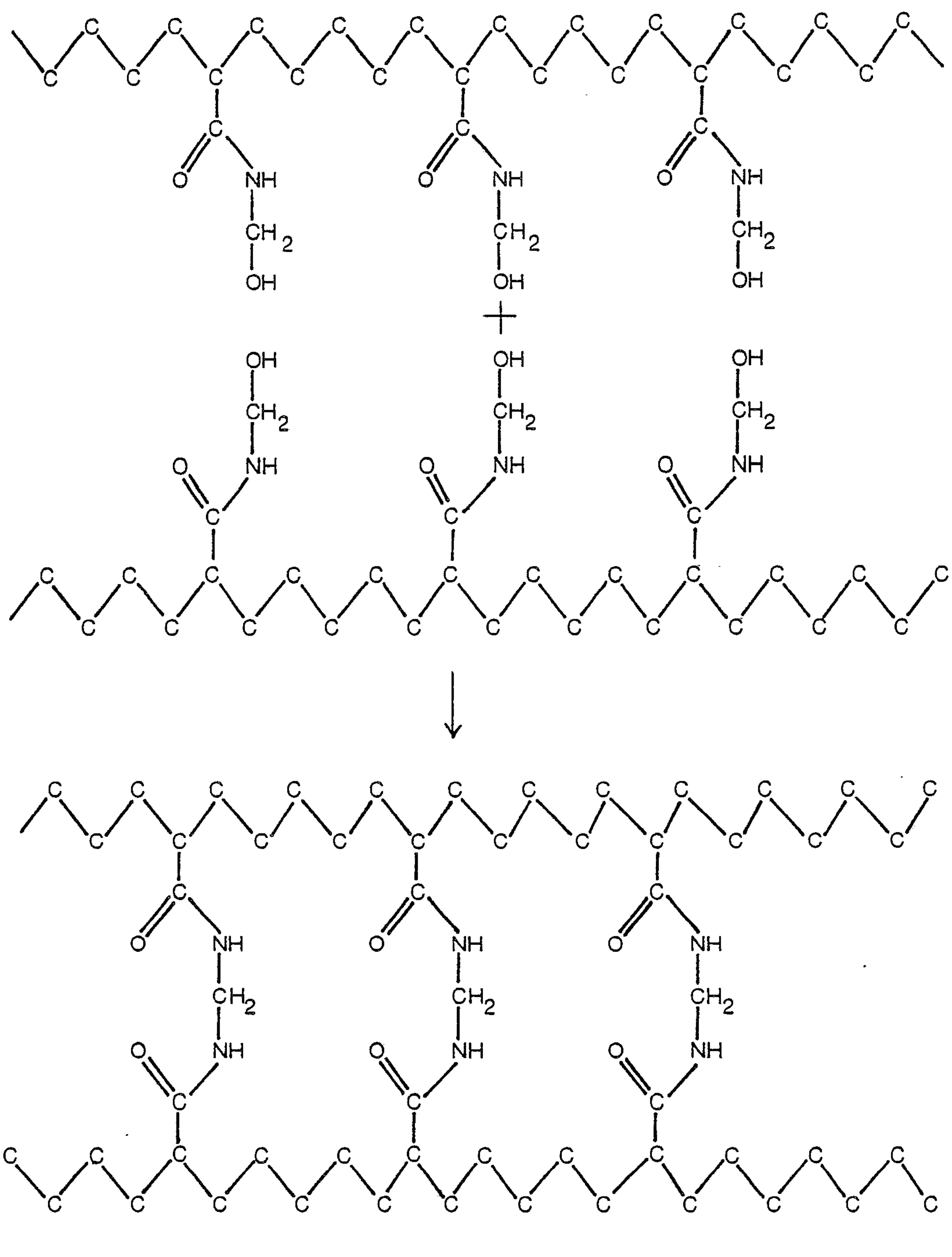

+ X $H_2O$ + X $CH_2O$

Latices of the nature shown in Fig. 1, usually require excessive amounts of alkali (10—12%) sodium hydroxide by weight of fibre) at temperatures from about 95—104°C (200—220°F) for 2 hours or more in order to effect fiberization (separation of the web into individual fibres). Such severe conditions are detrimental to most natural fibres and to many synthetic fibres resulting in fibre losses of about 15—20%. In addition, degradation products from the cellulosic fibres increase the amount of biodegradable matter in the spent repulping liquor, thereby necessitating costly treatment of the effluent or waste streams.

Recently, it has become desirable to eliminate the use of formaldehyde-based latices as binders for fibrous webs because of the known and suspected toxic effects of formaldehyde. Examples of such formaldehyde-based latices are those which employ N-methylolacrylamide and/or N-methylolmethacrylamide as the source of their self-crosslinking or curing ability. The N-methylol functionality is a latent source of formaldehyde because formaldehyde is released during the curing or crosslinking reaction. The crosslinking reaction between two polymer chains involves the condensation of pendent N-methylol functionalities to form bis-methylene amide crosslinks and formaldehyde.

Self-crosslinking latices have been used in papermaking and the manufacture of other non-woven products to impart strength, particularly wet strength, to the product so that the web does not disintegrate into the individual fibres comprising the web. To accomplish this, the latices are added to the web during the manufacturing process while the latices are in an uncured condition. Upon drying and curing, the latices develop crosslinking bonds between polymer molecules which cures the latex and imparts strength and integrity to the latex so that it can resist hydrolysis and depolymerization when exposed to water or some chemicals. This curing of the latex through crosslinking is the same mechanism by which a latex paint is transformed from a water dispersion of latex chemicals to a solid film of the latex polymers after drying of the latex paint. Because of the crosslinking, the cured latex film does not redisperse when wet with water. This ability to develop a strong crosslinking bond to resist depolymerization after curing of the latex is critical in order for the latex to develop wet strength. Previously much research has been devoted towards increasing the strength of the cured latex and its resistance to chemical attack.

In papermaking, a dichotomy exists between the wet strength requirements for the cured latex on the paper and the need to destroy the wet strength of the latex so as to break the web into its individual fibres for recovery of the fibres and their re-use. In any papermaking operation, typically there are significant amounts of off-specification products that are recycled in the papermaking operations by repulping the product into its original fibres for re-use. If a latex that develops strong crosslinking bonds which resist hydrolysis and chemical attacks (such as a latex developed for paint formulations) is used, then the repulping of the off-specification product is made very difficult because the individual fibres cannot be broken free from the latex bonding material because the latex resists weakening and depolymerization due to the strong crosslinking bonds. Under the more severe repulping conditions needed to depolymerize such strongly crosslinked latices, the fragile cellulosic fibres tend to be destroyed. Conversely, a latex that develops a weakly crosslinked bond may not have sufficient wet strength for the finished product to have adequate functionality when wet. For example, a latex reinforced paper towel may not have adequate wet strength to function when wet if the latex did not develop adequate wet strength through crosslinking. The present invention solves the problem of imparting adequate wet strength to paper through a cured latex bond while achieving depolymerization of the latex under repulping conditions that are mild enough to prevent substantial degradation of the cellulosic fibres so that the fibres can be recovered and re-used when necessary.

The present invention includes a non-woven cellulosic fibrous web in which the cellulose fibers are chemically modified by a cross-linking reaction with a binder comprising a copolymer latex of a monomer which is a polymerizable half-acid, half-amide corresponding to the following general formula:

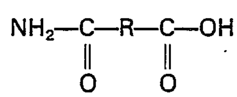

wherein R is a hydrocarbon chain containing a multiple bond capable of radical polymerization and at least one other ethylenically unsaturated monomer.

By means of this invention webs can be made having both dry and wet strength, acceptable wet to dry cross-directional tensile ratios (0.3 to 0.6) and which are repulpable under mild conditions.

The amount of the half-acid, half-amide, which for convenience may simply be referred to as "amic acid" which can be used with other monomeric species to make up the desired polymer in the latex binder can be for example, from about 1 to about 20% by weight of the total monomer charge, while about 2 to 10% by weight of the total monomer charge is the preferred amount.

Examples of the polymerizable, ethylenically unsaturated monomers are acrylic and methacrylic esters, amides, substituted amides, nitriles and acids, vinyl-acetate and other vinyl esters, vinyl esters and ketones, acrolein, maleic anhydride, maleic and fumaric esters and acids, styrene and substituted styrenes, vinyl pyridines, ethylene, butadiene, itaconic acid and its lower alkyl esters, itaconamide and N-alkylamides, N-vinylpyrrolidone, polymerizable derivatives of allyl alcohol, vinylacetic acid and the like. The emulsion polymerization of these monomers to yield latices can be accomplished for example by well known emulsion polymerization techniques as described in such chemistry texts as POLYMER SYNTHESES, Volume I and II, by Stanley R. Sandler and Wolf Karo, Academic Press, New York and London, (1974), an PREPARATIVE METHODS OF POLYMER CHEMISTRY, second edition, by Wayne R. Sorenson and Tod W. Campbell, Interscience Publishers (John Wiley & Sons), New York, (1968).

The latex binders prepared as described in this disclosure may be applied to non-woven webs, such as for example, dry-laid or wet-laid fibrous webs comprising natural or synthetic cellulosic fibres or combinations of such fibres, by any conventional technique for applying a latex to a non-woven web e.g.

printbonding, size press application or by spraying the structure to be strengthened. As will be appreciated by one of ordinary skill in the art to which the present invention pertains, minor proportions of non-cellulosic fibres, e.g. polyester of polypropylene, can be included in the non-woven web, particularly a dry-laid web, without departing from the gist of this invention. The proportion of non-cellulosic fibres must be low enough not to substantially affect the strength of the web. Typical methods for using elastomeric material to bond fibrous webs are disclosed in U.S. Patent 4,158,594 and U.S. Patent 3,879,257. The amount of latex polymer added to the web may be varied depending upon the degree of strengthening desired. From about 3 to 20% latex based upon the weight of the fibre is suitable for many purposes depending upon the amount of wet and dry strength desired and the composition and length of the fibres in the web. The preferred amount of latex to be applied is in the range of about 5 to 15% by weight of the fibre. If so desired, to accelerate the cure (crosslinking) of the polymer after application to the web, mineral acids or salts of acids such as ammonium, magnesium, zinc and tin chlorides, nitrates or sulfates may be added to the latex binder.

Without intending to be bound by theory, we believe that the crosslinking of the latex polymer molecules with the cellulosic substrate is what produces an increase in the strength characteristics of the bonded web. Prior to the disclosure of this invention, the wet strengthening of webs has been accomplished by the addition of a binder whose polymeric component contained reactive functional groups capable of crosslinking the polymer after it was applied to the web. This invention, however, utilizes the reaction between the pendent amic acid groups of the latex copolymer and the hydroxyl groups of the cellulose molecules of the fibrous web to form a water-insensitive fibre-polymer composite. The resulting composite can have a variety of properties depending upon the composition of the copolymer of the latex binder.

In order to recover the cellulosic fibres of the fibre-polymer composite, (such as rejected web material which had been spoiled in going over the driers or through calendars or the trim-off in the rewinding of roll and trim from sheets being prepared for shipping or the finished product which is perceived to contain manufacturing defects), the latex polymer-cellulose fibre crosslinking reaction that occurred during the curing process must be reversed under conditions which do not harm the fibres yet reduce the web tensile strength back to the original, unbonded value.

The most preferred latex polymer composition is a copolymer containing 61% by weight vinyl acetate (a percent of total polymer weight), 32.6% by weight n-butyl acrylate, and 6.4% by weight maleamic acid. The binder containing the preferred composition may be prepared for example by a standard emulsion copolymerization method as outlined in such chemistry texts as mentioned previously.

The wet tensile increase in webs treated with latices prepared as taught in this disclosure is a consequence of the presence of amic acid in the latex copolymer. When such a latex is deposited on fibrous web, the wet tensile is improved by the reaction of the pendent amide functionality of the amic acid comonomer and a cellulose hydroxyl group forming the water-insensitive, fibre-polymer composite represented in Fig. II below.

FIG. II

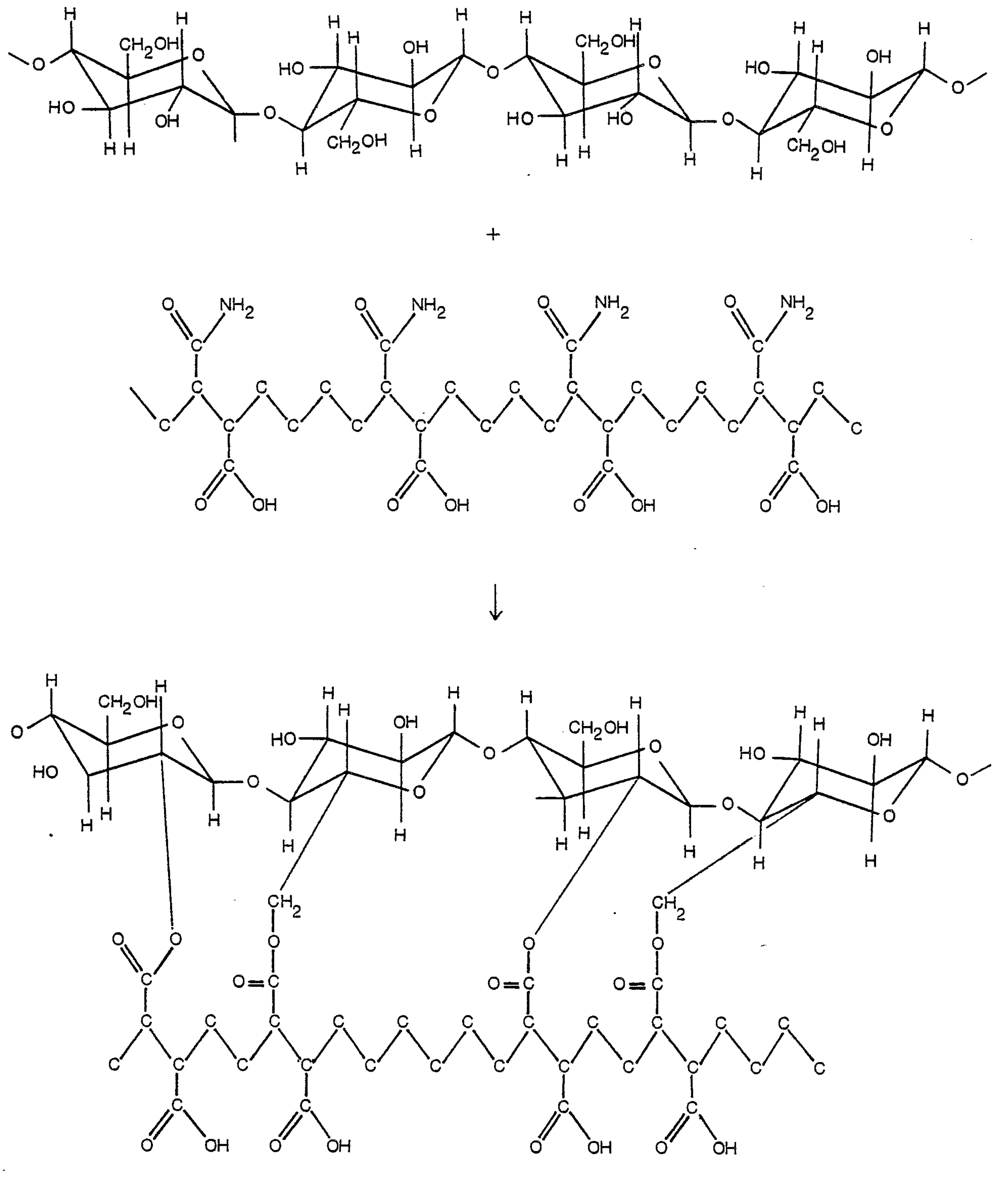

+ % $NH_3$

The reaction is facilitated by the presence of a vicinal, pendent carboxyl group which acceleraes the rate of the attack of the cellulosic hydroxyl group on the carboxyl carbon of the amide function.

The rate acceleration is due to the anchimeric assistance by the beta-carboxyl group to the reaction of the cellulose hydroxyl with the alpha-amide group. It is known that carboxylic acids participate in amide hydrolysis when the carboxyl group is situated beta to the amide group. Thus a mechanism envisioning the formation of an anhydride-like intermediate followed by attack of the cellulosic hydroxyl on the intermediate to form an ester cross-linkage and ammonia is postulated.

When a cellulosic fibrous web is treated with a latex as taught in this disclosure and cured, the sheet will have a wet to dry cross directional tensile ratio equal to 0.3 to 0.6. If this sheet is then subjected to a repulping or broking operation wherein it is slurried in an aqueous solution containing 1 to 5% sodium hydroxide (NaOH) based on fibre weight at temperature range of 65°—95°C (150° to 200°F) it will fiberize in a short period of time ranging from 30 to 60 minutes. Such a mild repulping operation produces a minimum amount of biodegradable matter in the spent repulping liquor thus obviating the need for an expensive effluent treating system to remove the biodegradable matter.

A fibrous web is said to be repulped when it is completely fiberized (separated into individual fibres). Complete fiberization occurs when all fibre clumps have been separated into individual fibres. The degree of difficulty (time, temperature, alkali concentration) required to completely fiberize a latex bound sheet defines the relative ease of repulpability of that sheet. For example, a latex-treated fibrous web would be deemed very easily repulpable if, as a result of a repulping operation, it became completely fiberized in 5 to 30 minutes at approximately 95°C (200°F) at 5% consistency using 5% NaOH based on fibre weight. A sheet would be classified non-repulpable if it could not be completely broken down into individual fibres in 3 to 4 hours as a result of a repulping operation at 95°C (200°F) at 5% consistency using 5% NaOH based on fibre weight.

Fibrous webs treated with latex binders as described in this invention, having a wet to dry cross directional tensile ratio equal to 0.3 to 0.6, are classifiable by the above standard as easily repulpable, and are preferably fiberized within 60 minutes in an aqueous alkaline solution within a temperature range of 65°C—95°C. Fibrous webs treated with latex binders whose polymer component contains pendent N-methylol functionalities, latices of the nature shown in Fig. 1, are essentially non-repulpable when measured by the above standard.

Fibrous webs treated with latex binders as disclosed herein are easily repulpable because of the presence of a polymerizable amic acid in the latex copolymer. The amide functionality of the amic acid reacts (cross-links) with the cellulose molecules of the fibrous web forming ester linkages. When the fibrous web is subjected to a repulping operation as described in this disclosure, it is readily fiberized by the action of the aqueous alkali on the fibrous web-latex polymer composite because the ester linkages between molecules (crosslinks) are readily broken (hydrolyzed) by the action of the aqueous alkali. The relative ease of the breaking of the intermolecular ester linkages is quite unexpected in view of the teachings of Japanese Patent Disclosure 74 90,390 that the resistance of acrylic copolymers to dry cleaning is increased by incorporating amido acid derivatives without damaging the various characteristics of acrylic copolymers considered desirable in the textile industry, especialy water-resistance.

The facility with which the ester crosslinks are broken during a repulping operation can be understood in terms of the unique molecular structure of the amic acid component of the binder copolymer. When the fibre-polymer composite is subjected to hot, aqueous alkali, the ester crosslinks are cleaved rather easily because they are vicinal or immediately adjacent to pendant carboxyl groups. The adjacent carboxyl groups enhance the rate of the hydrolysis of the ester crosslinks.

The presence of the carboxyl group in the amic acid component of the copolymer also facilitates fiberization of the web by rendering the uncrosslinked polymer water-swellable. The carboxyl groups are especially alkali soluble and their presence on the copolymer chain allows the copolymer to become at least water-swellable in the highly alkaline repulping environment.

The rate of fiberization is not as great for webs treated with latex binders whose copolymers do not contain maleamic acid as a comonomer because carboxyl groups have to be produced by the base-promoted hydrolysis of pendent groups such as for example, amides or esters to alkali-swellable carboxylate groups. Fibrous webs treated with latex binders whose polymer component contains pendent N-methylol groups are essentially non-repulpable because the methylene amide inter-polymer crosslinks (Fig. 1) are cleaved very slowly or not at all by aqueous alkali. Even if the inter-polymer crosslinks are cleaved, the resulting linear polymer is not easily lifted from the fibrous web until the polymer has been rendered water-soluble. This solubilization, via hydrolysis of the pendent ester groups into carboxyl groups, requires strong base at high temperature.

There are two other particular advantages in using latex binders as described in this invention. The first is that there is no formaldehyde present so that none can be released during any web application process or curing step in the treated product. This is an important advantage over self-crosslinking latex binders which contain N-methylol pendent functionalities in their polymer components because the N-methylol group is a latent source of formaldehyde. The elimination of formaldehyde thus assures that users of products made with these amic acid binders of this invention, and/or workers involved in producing such products, will not be exposed to formaldeyde and therefore cannot suffer any irritation which might be attributable to it.

Another advantage amic acid-containing latices have over self-crosslinking latices is their long term stability prior to application to fibrous webs. Self-crosslinking latices are prone to instability during long term storage because the latex particles can coalesce due to a crosslinking reaction between polymer molecules on separate latex particles. This type of coalescence is impossible with amic acid containing latices because the amic acid functionalities only react with cellulosic hydroxyl groups after being deposited on a fibrous web.

This aspect of the invention will be more clearly understood by reference to the following Examples, which are preceded by four Preparations. The Examples illustrate typical applications of the basic principles of the invention to the bonding of cellulosic fibrous webs.

Preparation 1

Preparation of maleamic acid (Z)-4-amino-4-oxo-2-butenoic acid.

Into a one litre resin kettle equipped with a mechanical stirrer and a thermometer are placed 120 g of 29% aqueous ammonia (2.05 moles) and 500 g of water. To this stirred solution is added 200.9 g of maleic anhydride (2.05 moles) in small increments. The reaction mixture is maintained at 55°C to 60°C until the maleic anhydride addition is complete. The reaction mixture is then cooled to room temperature at which time 1295 g of water are added to make a solution which is 11.5% by weight maleamic acid. Maleamic acid isolated from the solution by evaporation of the water yields a white solid which decomposed at 151°C. (Literature value is 150°C—152°C).

Preparation II

Preparation of amic acid latex binder — maleamic acid.

A one litre resin kettle is fitted with a thermometer, three addition funnels, a stirrer, and a nitrogen inlet tube. The kettle is charged with 95 g of deionized water, 21.5 g of 70% aqueous octylphenoxypolyethoxy ethanol — 30 ethylene oxide units (commercial product trademark *Triton X-305;* Rohm & Haas Co.), 2.9 g of potassium persulfate, 0.4 g of hydroxyethyl cellulose (commercial product trademark *Cellosize WP-09-L;* Union Carbide Corporation), 0.35 g of sodium bicarbonate, and 14.5 g of monomer mix. "Triton" and "Cellosize" are Trade Marks. The monomer mix consists of 51.5 g of N-butylacrylate and 96 g of vinylacetate. The remaining amount of monomer mix, 130.5 g, is placed in one of the addition funnels. Another one of the addition funnels is filled with 82.0 g of 11.5% maleamic acid solution prepared in accordance with Preparation I and the remaining funnel is filled with 40 g of a 2% aqueous sodium sulfoxylate formaldehyde solution (commercial product trademark *Discolite;* Royce Chemical Co.). "Discolite" is a Trademark. The contents of the reaction flask are surged with dry nitrogen for 30 minutes, and then heated to 44°C. The polymerization is then commenced by the addition of 2 g of the 2% aqueous sodium sulfoxylate formaldehyde solution from the addition funnel. Then the reaction temperature reaches 48°C, the monomer mix and additions of the sodium sulfoxylate formaldehyde solution are begun and kept at such a rate as to maintain a reaction temperature equal to 52 ± 2°C. After 30 minutes from the beginning of the monomer addition, the 11.5% maleamic acid solution is added at such a rate as to finish simultaneously with the monomer mix and the sodium sulfoxylate formaldehyde solution. After all the additions are completed, the reaction mixture is maintained at 55°C for 90 minutes. The product of the reaction is a 37.7% solids latex with a Brookfield viscosity of 200 mPa.s (Model RVT at 100 rpm Spindle #3).

Preparation III

Preparation of Itaconamic Acid (4-amino-4-oxo-2-methylene butanoic acid).

The procedures of Preparation I are followed exactly except that 229.7 g of itaconic anhydride (2.05 moles) replaces the 200.9 g of maleic anhydride. The isolated product melted at 180—183°C.

Preparation IV

The procedures of Preparation II are followed exactly except that 40 g of 11.5% itaconamic acid solution replaces the 82 g of maleamic acid solution. The product is a 27% solids latex with a Brookfield viscosity of 100 mPa.s (Model RVT at 100 rpm Spindle #3).

Example 4

Web Treatment

A saturation bath is prepared by diluting 15 grams of the latex from Preparation II with 85 grams of deionized water. Sheets of Whatman #4 Chromatography Paper measuring approximately 22.9 × 19.1 cm (9" × 7.5") are immersed in a saturation bath, squeezed through a laboratory wringer, dried at room temperature and cured for 2½ minutes at 149°C (300°F). The sheets are then tested for increases in wet and dry tensiles over untreated controls. In a similar manner, web samples were prepared also from the latex described in Preparation IV. The results are presented in the Table below wherein tensile measurements were obtained on a Thwing Albert Tensile Tester in accordance with TAPPI Standard Number T 456m-49. Tensiles were measured cross direction for a wet strip and a dry strip and are expressed in pounds per inch. Pounds/inch may be converted to the standard metric unit of g/15mm by multiplying by 268.4. The amount of latex applied to the sheet was ten percent by weight of the sheet, except in the case of the control.

TENSILES

| TREATMENT | WET | DRY |
| --- | --- | --- |
| | g/15mm (lb/in) | g/15mm (lb/in) |
| Control | 241.6 (0.9) | 2952.4 (11.0) |
| Preparation II | 2603.5 (9.7) | 4213.9 (15.7) |
| Preparation IV | 1046.8 (3.9) | 2442.4 (9.1) |
| Commercial* NMA Latex | 2415.6 (9.0) | 4240.7 (15.8) |

*Made by emulsion polymerization of ethylene, vinylacetate and N-methylol acrylamide (NMA) in a ratio by weight of approximately 14:82:4.

Example 5

Repulping

The ease of repulpability of a sheet may be observed as the length of time that it must be slurried in an aqueous NaOH solution in order to completely defibre. Thus, a number of sheets weighing a total of 20 grams are cut into small pieces and added to 80 grams of a 1.875% aqueous NaOH solution. The temperature of the resulting slurry is brought to 95°C (200°F) and held there until the sheet has been completely fiberized. Complete fiberization is achieved when all fibre aggregates have been reduced to individual fibres.

| TREATMENT | TIME FOR COMPLETE FIBERIZATION |
| --- | --- |
| Preparation II | 30 minutes |
| Commercial NMA Latex | 4 hours |

While the invention has been particularly described with reference to preferred embodiments thereof, it is understood that various other changes and modifications thereof will occur to a person skilled in the art without departing from the scope of the invention as defined by the appended claims.

**Claims**

1. A cellulosic non-woven fibrous web characterised in that the cellulose fibers are chemically modified by a cross-linking reaction with a binder comprising either

a water-soluble copolymer of A) a half-acid, half-amide corresponding to the following general formula:

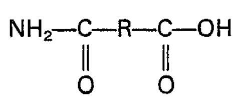

wherein R is a hydrocarbon chain containing a multiple bond capable of radical polymerization and B) at least one other ethylenically unsaturated monomer, or

a copolymer latex of a monomer which is a polymerizable half-acid, half-amide corresponding to the following general formula:

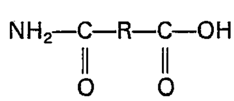

wherein R is a hydrocarbon chain containing a multiple bond capable of radical polymerization, and at least one other ethylenically unsaturated monomer.

2. A web according to claim 1, characterised in that the copolymer is present in an amount equal to 0.1 to 5% based on the weight of the fibre in the web.

3. A web according to claim 1 or 2, characterised in that the half-acid, half-amide corresponding to the general formula is maleamic acid, fumaramic acid or itaconamic acid.

4. A web according to any one of the preceding claims, characterised in that the other ethylenically unsaturated monomer comprises a vinyl ester of an aliphatic acid having one to ten carbon atoms.

5. A web according to claim 4, characterised in that the monomer is vinyl acetate.

6. A web according to claim 5, characterised in that copolymer further includes esters of acrylic or methacrylic acids.

7. A web according to any one of the preceding claims, characterised in that the half-acid, half-amide comprises from 1 to 20% by weight of the copolymer.

8. A web according to claim 7, characterised in that the half-acid, half-amide comprises from 2 to 10% by weight of the copolymer.

9. A papermaking process, comprising the step of re-pulping a cellulosic fibrous web characterised in that the cellulosic fibrous web is a web as claimed in any one of claims 1 to 8.

10. A process according to claim 9, wherein the repulping is carried out within 60 minutes in an aqueous alkaline solution at a temperature range of 65° to 95°C (150° to 200°F).

**Patentansprüche**

1. Faservliesbahn aus Cellulose, dadurch gekennzeichnet, daß die Cellulosefasern durch eine Vernetzungsreaktion mit einem Bindemittel chemisch modifiziert sind, welches entweder

ein wasserlösliches Copolymeres aus A) einem Halbsäurehalbamid der folgenden allgemeinen Formel

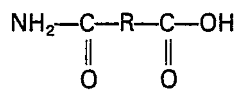

worin R eine Kohlenwasserstoffkette, die eine zur radikalischen Polymerisation befähigte Mehrfachbindung enthält, darstellt und B) mindestens einem anderen ethylenisch ungesättigten Monomeren, oder

einen Copolymerlatex aus einem Monomeren, das ein polymerisierbares Halbsäurehalbamid der folgenden allgemeinen Formel

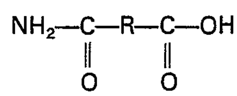

ist, worin R eine Kohlenwasserstoffkette bedeutet, die eine zur radikalischen Polymerisation befähigte Mehrfachbindung aufweist, und mindestens einem anderen ethylenisch ungesättigten Monomeren, umfaßt.

2. Faservliesbahn nach Anspruch 1, dadurch gekennzeichnet, daß das Copolymere in einer Menge von 0,1 bis 5 Gew.-%, bezogen auf das Gewicht der Fasern in der Bahn vorhanden ist.

3. Faservliesbahn nach Anspruch 1 oder 2, dadurch gekennzeichnet, daß das Halbsäurehalbamid der allgemeinen Formel Maleamidsäure, Fumaramidsäure oder Itaconamidsäure ist.

4. Faservliesbahn nach einem der vorhergehenden Patentansprüche, dadurch gekennzeichnet, daß das andere ethylenisch ungesättigte Monomere einen Vinylester einer aliphatischen Säure mit 1 bis 10 Kohlenstoffatomen darstellt.

5. Faservliesbahn nach Anspruch 4, dadurch gekennzeichnet, daß das Monomere Vinylacetat ist.

6. Faservliesbahn nach Anspruch 5, dadurch gekennzeichnet, daß das Copolymere außerdem Ester von Acryl- oder Methacrylsäure umfaßt.

7. Faservliesbahn nach einem der vorhergehenden Patentansprüche, dadurch gekennzeichnet, daß das Halbsäurehalbamid 1 bis 20 Gew.-% des Copolymeren umfaßt.

8. Faservliesbahn nach Anspruch 7, dadurch gekennzeichnet, daß das Halbsäurehalbamid 2 bis 10 Gew.-% des Copolymeren umfaßt.

9. Papierherstellungsverfahren, welches die Stufe des erneuten Zermahlens einer Cellulosefaserbahn eine Bahn gemäß einem der Ansprüche 1 bis 8 ist.

10. Verfahren nach Anspruch 9, bei dem das erneute Zermahlen innerhalb von 60 min. in einer wäßrigalkalischen Lösung in einem Temperaturbereich von 65 bis 95°C (150 bis 200°F) durchgeführt wird.

**Revendications**

1. Un mat fibreux non tissé cellulosique caractérisé par le fait que les fibres de cellulose sont modifiées chimiquement par une réaction de réticulation avec un liant comprenant soit un copolymère, soluble dans l'eau, de A) un hémi-acid-hémi-amide correspondant à la formule générale suivante

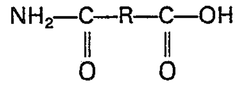

dans laquelle R est une chaîne hydrocarbonée contenant une liaison multiple susceptible de polymérisation radicalaire, et B) au moins un autre monomère à insaturation éthylénique soit un latex de copolymère d'un monomère qui est un hémi-acide-hémi-amide polymérisable correspondant à la formule générale suivante

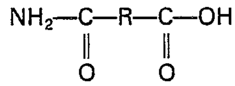

dans laquelle R est une chaîne hydrocarbonée contenant une liaison multiple susceptible de polymérisation radicalaire, et au moins un autre monomère à insaturation éthylénique.

2. Un mat selon la revendication 1 caractérisé par le fait que le copolymère est présent en une quantité égale à 0,1 à 5% par rapport au poids des fibres du mat.

3. Un mat selon la revendication 1 ou 2 caractérisé par le fait que l'hémi-acide-hémi-amide correspondant à la formule générale est l'acide maléamique, l'acide fumaramique ou l'acide itaconamique.

4. Un mat selon l'une quelconque des revendications précédentes caractérisé par le fait que l'autre monomère à insaturation éthylénique comprend un ester vinylique d'un acide aliphatique ayant 1 à 10 atomes de carbone.

5. Un mat selon la revendication 4 caractérisé par le fait que le monomère est l'acétate de vinyle.

6. Un mat selon la revendication 5 caractérisé par le fait que le copolymère comprend de plus des esters d'acides acrylique ou méthacrylique.

7. Un mat selon l'une quelconque des revendications précédentes caractérisé par le fait que l'hémi-acide-hémi-amide constitue de 1 à 20% du poids du copolymère.

8. Un mat selon la revendication 7 caractérisé par le fait que l'hémi-acide-hémi-amide constitue 2 à 10% du poids du copolymère.

9. Un procédé de fabrication du papier comprenant le stade de remise en pâte d'un mat fibreux cellulosique caractérisé par le fait que le mat fibreux cellulosique est un mat comme revendiqué dans l'une quelconque des revendications 1 à 8.

10. Un procédé selon la revendication 9 dans lequel la remise en pâte est effectuée pendant 60 minutes dans une solution alcaline aqueous dans une gamme des températures de 65 à 95°C (150° à 200°F).